# EUROPÄISCHE PATENTSCHRIFT

(11) **EP 2 468 568 B1**
(45) Veröffentlichungstag und Bekanntmachung des Hinweises auf die Patenterteilung: **29.05.2013**
(21) Anmeldenummer: 11195039.0
(22) Anmeldetag: 21.12.2011
(51) Int. Cl.: B60N 2/50, B60N 2/52, B60N 2/54, B60N 2/06

(54) **Horizontale Sitzverstellung mit Stellglied**
Horizontal seat adjustment with positioning member
Réglage horizontal de siège avec actionneur

(30) Priorität: 21.12.2010 DE 102010055344
(43) Veröffentlichungstag der Anmeldung: 27.06.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- DE-A1- 1 916 403
- DE-A1- 3 517 345
- DE-B3-102008 016 685

## Beschreibung

Die Erfindung ist auf eine Sitzfederung, insbesondere eine horizontale Sitzfederung, für Fahrzeugsitze nach dem Oberbegriff der Patentansprüche 1 und 2 gerichtet.

Die aus dem Stand der Technik bekannten horizontalen Fahrzeugsitzfederungen erfordern stets die Anbringung eines in der zu federnden Richtung orientierten Federelements. Eine solche Anordnung führt dazu, dass die Fahrzeugsitzfederung zum Erreichen einer bestimmten Federungscharakteristik in der zu federnden Richtung sehr groß wird beziehungsweise nur ein entsprechend kleineres Federelement verwendet werden kann, wodurch jedoch die gewünschte Federungscharakteristik nicht erreicht werden kann. Ferner sind die Federkennlinien der aus dem Stand der Technik bekannten Federelemente nicht veränderbar bzw. beeinflussbar, wodurch die resultierende Federcharakteristik nicht optimal ist.

Es ist somit die Aufgabe der vorliegenden Erfindung eine Fahrzeugsitzfederung zur Federung von im Wesentlichen horizontalen Anregungen bereitzustellen, die eine verbesserte Federungscharakteristik ermöglicht, ohne dabei die Nachteile des Standes der Technik zu verwirklichen.

Die zuvor genannte Aufgabe wird erfindungsgemäß durch einen Sitz mit den Merkmalen der Ansprüche 1 und 2 gelöst.

Erfindungsgemäß weist die Federeinrichtung mindestens ein sich länglich zwischen zwei Anbringungsbereichen erstreckendes Federelement auf, das mit einer Deformationseinrichtung zumindest zeitweise biegbar ist und dessen Federkennlinie mit mindestens einem geneigt zum Federelement angeordneten Stellglied veränderbar ist.

Bevorzugt erstreckt sich das Federelement im Wesentlichen in einer horizontalen Ebene und besonders bevorzugt genau in einer sich horizontal erstreckenden Ebene.

Geländegängige Fahrzeuge sind bevorzugt neben anderen Fahrzeugen alle landwirtschaftlichen Fahrzeuge, Baufahrzeuge, militärischen Fahrzeuge, Wasserfahrzeuge, Sportfahrzeuge etc. Als geneigt zu seiner Längsrichtung wird vorzugsweise ein Winkel zwischen 1 ° und 179°, bevorzugt zwischen 45° und 135° und besonders bevorzugt ein Winkel zwischen 80° und 100°, insbesondere ein Winkel von im Wesentlichen 90° oder genau 90°, verstanden.

Die erfindungsgemäße Lösung ist vorteilhaft, da auf einfache Weise und mit einer langen Lebensdauer die gewünschte Federungscharakteristik bzw. die Verbesserung der Federungscharakteristik erreichbar ist. Weiterhin ist die Federung bevorzugt an variierende Parameter, wie das Gewicht des Passagiers, die Neigung des Fahrzeugs, die Geschwindigkeit der Krafteinleitung und/oder sonstige Parameter anpassbar.

Gemäß einer weiteren bevorzugten Ausführungsform der vorliegenden Erfindung bildet die Deformationseinrichtung einen Aufnahmebereich aus, durch den sich das Federelement hindurch erstreckt.

Diese Ausführungsform ist vorteilhaft, da das Federelement aufgrund des Aufnahmebereichs genau positioniert ist bzw. positionierbar ist und daher eine genaue Dimensionierung und Auslegung des Federelements möglich ist, wodurch wiederum die Lebensdauer und die Kosten der gesamten Fahrzeugsitzfederung positiv beeinflussbar sind.

Gemäß einer weiteren bevorzugten Ausführungsform der vorliegenden Erfindung bilden zwei Kontaktelemente den Aufnahmebereich aus und weisen Kontaktflächenanteile auf, die nur zeitweise mit dem Federelement in Kontakt stehen.

Diese Aufführungsform ist vorteilhaft, da eine Federung des Fahrzeugsitzes in Fahrzeugbreiten- und/oder Fahrzeuglängsrichtung, insbesondere in gegensätzliche Richtungen, mit bevorzugt nur einem Federelement möglich ist. Es ist jedoch ebenfalls denkbar, dass mehrere Federelemente vorgesehen sind, wobei genau ein Federelement oder mehrerer Federelemente zum Federn des Sitzes bzw. der Sitzfläche in Fahrzeugbreitenrichtung vorgesehen sind und/oder genau ein Federelement oder mehrerer Federelemente zum Federn des Sitzes bzw. der Sitzfläche in Fahrzeugbreitenrichtung vorgesehen sind.

Gemäß einer weiteren bevorzugten Ausführungsform der vorliegenden Erfindung sind die Kontaktflächenabschnitte, die bevorzugt zumindest zeitweise mit dem Federelement in Kontakt bringbar sind, zumindest abschnittsweise gebogen. Besonders bevorzugt können auch gerade oder mit einer geringeren Biegung ausgebildete Kontaktflächenabschnitte vorgesehen sein, die sich besonders bevorzugt zwischen den gebogenen Kontaktflächenabschnitten erstrecken und diese verbinden. Ein Verbund aus zwei gebogenen Kontaktflächenabschnitten und einem dazwischen angeordneten geraden oder mit einer geringeren Biegung versehenen Kontaktflächenabschnitt bildet bevorzugt ein Kontaktelement aus.

Diese Ausführungsform ist vorteilhaft, da das Federelement in einer fließenden Bewegung und an einem fließenden Übergang verformbar ist, wodurch zum einen ein positiver Effekt auf die Federcharakteristik und zum anderen eine sehr belastungsarme Verformung des Federelements erreicht wird, da Belastungssprünge reduziert bzw. verhindert werden.

Gemäß einer weiteren bevorzugten Ausführungsform der vorliegenden Erfindung ist das Stellglied elektrisch, mechanisch, elektro-mechanisch, pneumatisch, hydraulisch betrieben. Es ist ebenfalls denkbar, dass das Stellglied durch eine Kombination der zuvor genannten technischen Ansätze oder einen ähnlichen Ansatz betreibbar ist.

Diese Ausführungsform ist vorteilhaft, da die in dem jeweiligen Fahrzeug vorhandenen Energiequellen, wie z.B. Strom, Druckluft, Hydraulik, verwendet werden können, um das Stellglied zu betreiben bzw. das Stellglied in eine andere Konfiguration zu überführen bzw. das Stellglied in eine andere Position zu bewegen.

Gemäß einer weiteren bevorzugten Ausführungsform der vorliegenden Erfindung ist mindestens eine Sensoreinheit zur Erfassung von zum Beispiel Sitzbewegungen, Federbewegungen, Bewegungen der Deformationseinrichtungen und/oder Fahrzeugbewegungen, wie z.B. Kippbewegungen, insbesondere in Fahrzeuglängsrichtung und/oder Fahrzeugbreitenrichtung, und/oder zur Erfassung von Stellungen bzw. Positionen des Sitzes, der Feder, der Deformationseinrichtung und/oder des Fahrzeugs beispielsweise gegenüber dem Untergrund oder der Umgebung vorgesehen, die Daten an eine Steuereinrichtung zum Ansteuern des Stellglieds übermittelt. Es ist ebenfalls denkbar, dass zum Erfassen einzelner oder aller der zuvor genannten Stellungen und/oder Bewegungen mehrere verschiedene und an verschiedenen Positionen angeordnete Sensoreinrichtungen vorgesehen sind. Die Sensoreinrichtung stellt bevorzugt ein Wegmeßsystem zur Erfassung der Position der Deformationseinrichtung, der Durchbiegung des pneumatischen Federelements und/oder der Dehnung des pneumatischen Federelements dar.

Diese Ausführungsform ist vorteilhaft, da eine genaue Erfassung der jeweiligen Fahr- und/oder Sitzsituation bevorzugt in Echtzeit möglich ist. Weiterhin ist denkbar, dass die von den Sensoreinrichtungen erfassten Daten vom Fahrzeugsitz oder dem Fahrzeug gespeichert werden, um beispielsweise zu einem späteren Zeitpunkt, wie z.B. bei einem Wartungstermin, ausgewertet werden zu können.

Erfindungsgemäß ist mindestens ein Stellglied und bevorzugt genau ein Stellglied mit einem Kontaktelement oder einem Anbringungsbereich zum zumindest abschnittsweise linearen Bewegen oder zum zumindest abschnittsweise kurvenförmigen Bewegen des Kontaktelements oder des Anbringungsbereichs gekoppelt. Ein Stellglied kann hierbei bevorzugt ein hydraulisch, elektrisch, mechanisch, pneumatisch, elektro-magnetisch, etc. betreibbares Element, insbesondere ein Kolbenelement, ein Spindelelement, ein Piezoelement, ein Linearmotor oder ähnliches sein. Es hierbei denkbar, dass nicht nur genau eines der zuvor genannten Elemente vorgesehen wird, sondern auch eine Vielzahl eines Elements und/oder mehrerer Element vorgesehen wird.

Diese Ausführungsform ist vorteilhaft da auf eine einfache und sichere Weise die Federcharakteristik bzw. Dämpfungscharakteristik des erfindungsgemäßen Sitzes in Abhängigkeit beliebiger Parameter, insbesondere dem Gewicht des Passagiers, der Anregungsstärke und/oder der Fahrzeugneigung, beeinflussbar ist.

Gemäß einer weiteren bevorzugten Ausführungsform der vorliegenden Erfindung ist das Federelement eine Spiralfeder bzw. eine Schraubenfeder oder ein pneumatisches Federelement, insbesondere ein schlauchförmiges Kunststoffelement, das bei einer Biegung durch die Deformationseinrichtung eine Auslenkung in Fahrzeugsitzbreitenrichtung und/oder in Fahrzeugsitzlängenrichtung erfährt und zumindest zeitweise an mindestens einem der gebogenen Kontaktflächenabschnitte der Deformationseinrichtung anliegt.

Diese Ausführungsform ist vorteilhaft, da sie die Verwendung eines relativ großen Federelements auf kleinem Bauraum ermöglicht, da das Federelement bevorzugt im wesentlichen horizontal und besonders bevorzugt genau horizontal angeordnet ist und somit nicht in Längsrichtung, sondern quer zur Längsrichtung bzw. Erstreckungsrichtung belastbar ist.

Erfindungsgemäß ist bei einer ersten Anregung des Fahrzeugsitzes eine an die Anregung angepasste gleichsinnige Ansteuerung des Stellglieds zur Veränderung der Position des Anbringungsbereichs des Federelements, insbesondere der Spiralfeder oder des pneumatischen Federelements, zum Eliminieren der Federvorspannung durchführbar und bei einer zweiten Anregung des Fahrzeugsitzes ist eine an die Anregung angepasste gegensinnige Ansteuerung des Stellglieds zur Veränderung der Position des Anbringungsbereichs, des Federelements, insbesondere der Spiralfeder oder dem pneumatischen Federelement, zum Verstärken der Federkennlinie durchführbar, wobei die zweite Anregung bevorzugt stärker ist als die erste Anregung.

Mit gleichsinnig wird bevorzugt eine in die gleiche Richtung gerichtete Bewegung verstanden und mit gegensinnig wird bevorzugt eine entgegen einer Bewegungsrichtung gerichtete Bewegung verstanden.

Eine Veränderung der Position eines Anbringungsbereichs des Federelements entspricht bevorzugt einer Verschiebung eines Federfußpunktes des Federelements. Es ist ebenfalls denkbar, dass beide Anbringungsbereiche und somit beide Federfußpunkte eines Federelements verschiebbar sind.

Diese Ausführungsform ist vorteilhaft, da in Abhängigkeit der Anregungsstärke die Federkennlinie und somit die Federcharakteristik beeinflussbar bzw. veränderbar ist.

Erfindungsgemäß ist bei einer ersten Anregung des Fahrzeugsitzes eine an die Anregung angepasste gegensinnige Ansteuerung des Stellglieds zur Veränderung der Position des gebogenen Kontaktflächenabschnitts der Deformationseinrichtung zum Eliminieren der Federvorspannung des Federelements, insbesondere des pneumatischen Federelements oder der Spiralfeder, durchführbar und bei einer zweiten Anregung des Fahrzeugsitzes ist eine an die Anregung angepasste gleichsinnige Ansteuerung des Stellglieds zur Veränderung der Position des gebogenen Kontaktflächenabschnitts der Deformationseinrichtung zum Verstärken der Federkennlinie des Federelements, insbesondere des pneumatischen Federelements oder der Spiralfeder, durchführbar, wobei die zweite Anregung bevorzugt stärker ist als die erste Anregung.

Diese Ausführungsform ist vorteilhaft, da in Abhängigkeit der Anregungsstärke die Federkennlinie und somit die Federcharakteristik beeinflussbar bzw. veränderbar ist.

Durch Bezugnahme wird der Gegenstand einer am selben Tag von derselben Anmelderin und ebenfalls die Federung eines Fahrzeugsitzes in Fahrzeugbreiten- und/oder Fahrzeuglängsrichtung betreffenden Patentanmeldung vollumfänglich zum Gegenstand der vorliegenden Patentanmeldung gemacht.

Weitere Vorteile, Ziele und Eigenschaften vorliegender Erfindung werden anhand nachfolgender Beschreibung anliegender Zeichnungen erläutert, in welchen beispielhaft Fahrzeugsitzfederungen für die im Wesentlichen horizontale Federung eines Fahrzeugsitzes dargestellt sind. Bauteile der Fahrzeugsitzfederungen, welche in den Figuren wenigsten im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1: eine schematische Darstellung eines Fahrzeugs mit einem Fahrzeugsitz;
- Fig. 2: eine schematische zweidimensionale Darstellung einer ersten Ausführungsform einer Federeinrichtung eines Fahrzeugsitzes; und
- Fig. 3: eine schematische zweidimensionale Darstellung einer zweiten Ausführungsform einer Federeinrichtung eines Fahrzeugsitzes.

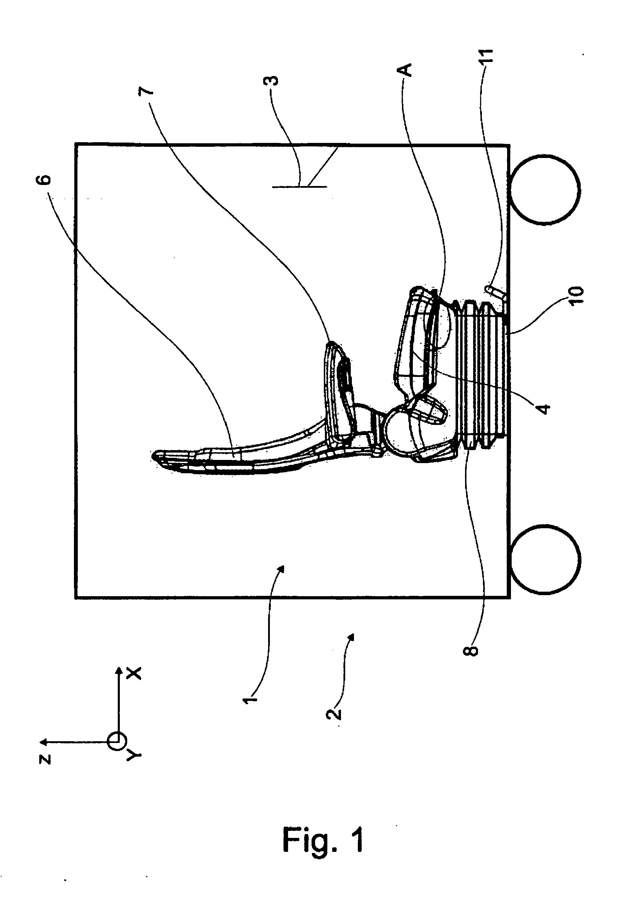

In Fig. 1 ist ein Sitz 1 bzw. ein Fahrzeugsitz 1 in einem Fahrzeug 2 dargestellt. Der Fahrzeugsitz 1 ist in der Fahrzeuglängsrichtung X orientiert und weist eine sich in Fahrzeugbreitenrichtungen Y und Fahrzeuglängsrichtung X erstreckende Sitzfläche 4 sowie eine sich in Fahrzeughöhenrichtung Z erstreckende Rückenlehne 6 auf, die bevorzugt gegenüber der Sitzfläche 4 schwenkbar angeordnet ist. Mit dem Bezugszeichen 3 ist ein Lenkrad gekennzeichnet, das von einer auf dem Sitz 1 sitzenden Person (nicht gezeigt) bedienbar ist. Weiterhin sind an dem Sitz 1, insbesondere an der Rückenlehne 6, bevorzugt eine oder zwei Armauflagen 7 angeordnet.

Die Sitzfläche 4 ist bevorzugt durch einen Haltebereich 8 von der Oberseite des Fahrzeugbodens beabstandet, wobei das Fahrzeug 2 und der Fahrzeugsitz 1 bevorzugt über einen Kopplungsbereich 10 fest oder zeitweise beweglich miteinander verbunden sind. Eine Bewegung des Sitzes 1 gegenüber dem Fahrzeug 2 kann beispielsweise ein Verschieben, insbesondere in Fahrzeuglängsrichtung X, sein, wobei mittels des Griffs 11 eine Sitzverschiebung beeinflussbar oder steuerbar ist. Das Bezugszeichen A kennzeichnet einen Bereich in dem die Horizontalfederung des Fahrzeugsitzes 1 bevorzugt angeordnet ist.

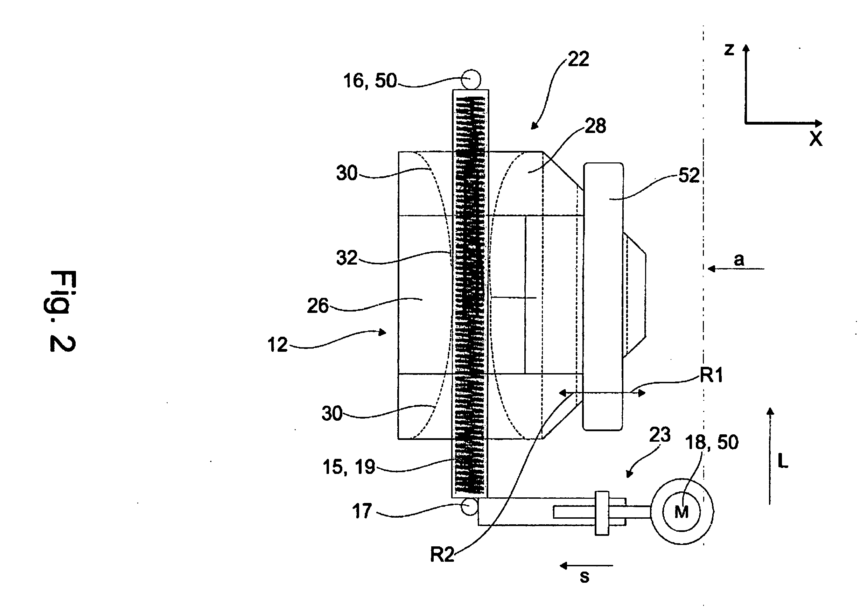

In Figur 2 ist eine bevorzugt in dem Bereich A (Fig. 1) angeordnete Federeinrichtung 12 zum im Wesentlichen horizontalen Federn und/oder Dämpfen von in den Fahrzeugsitz 1 eingeleiteten Schwingungen bzw. Anregungen dargestellt. Im Wesentlichen horizontal beschreibt bevorzugt eine zur vertikalen Achse Z geneigte, insbesondere im Wesentlichen in einem Winkel von 90° geneigte oder in einem Winkel von genau 90° geneigte, Richtung.

Es ist hierbei vorstellbar, dass sich das Federelement 15, 19 mit seiner Längsrichtung L im Wesentlichen oder vollständig in Sitz- bzw. Fahrzeuglängsrichtung X erstreckt und/oder sich im Wesentlichen oder vollständig in Sitz- bzw. Fahrzeugbreitenrichtung Y erstreckt. Eine Federung bzw. Dämpfung erfolgt bevorzugt im Wesentlichen rechtwinklig zur Längsrichtung L des Federelements 15, 19 und besonders bevorzugt genau rechtwinklig zu der Längsrichtung L des Federelements 15, 19.

Das Federelement, insbesondere die Schraubenfeder oder Spiralfeder 19, erstreckt sich bevorzugt zwischen einem Anbringungsbereich 16 und einer Anbringungsstelle 17, wobei der erste Anbringungsbereich 16 bevorzugt an dem Federungsoberteil 50 angeordnet ist bzw. damit verbunden ist und die Anbringungsstelle 17 einen Kopplungsbereich bzw. eine Verbindungsstelle, insbesondere ein Gelenk oder ein Lager, zum Verbinden eines Endes des Federelements 15, 19 mit einem Stellglied 23 darstellt. Das mit dem Stellglied 23 verbundene Ende des Federelements 15, 19 kann fest oder beweglich an dem Stellglied 23 angebracht sein. Das Stellglied 23 erstreckt sich bevorzugt zwischen der Anbringungsstelle 17 und dem Anbringungsbereich 18 am Federungsoberteil 50, wobei besonders bevorzugt durch das Stellglied 23 der Abstand zwischen dem Anbringungsbereich 18 am Federungsoberteils 50 und der Anbringungsstelle 17, insbesondere stufenlos oder in Stufen, veränderbar ist.

Das Bezugszeichen 52 kennzeichnet ein Federungsunterteil, das bevorzugt mit der Deformationseinrichtung 22 verbunden ist. Die Deformationseinrichtung 22 bildet bevorzugt eine spangenartige Einrichtung mit einem ersten Kontaktelement 26 und einem zweiten Kontaktelement 28 aus, die in Y-Richtung bzw. geneigt, insbesondere rechtwinklig, zur Längsrichtung L des Federelements 15, 19 voneinander beabstandet sind. Der Abstand, den die Kontaktelemente 26, 28 zueinander aufweisen, entspricht bevorzugt im Wesentlichen dem Durchmesser des Federelements 15, 19, insbesondere im entspannten Zustand. Die Kontaktelemente sind bevorzugt symmetrisch aufgebaut und weisen an ihren äußeren Enden bevorzugt erste Kontaktflächenanteile 30 auf, die durch einen zweiten Kontaktflächenbereich 32 miteinander verbunden sind. Besonders bevorzugt weisen die ersten Kontaktflächenanteile 30 eine stärker Krümmung bzw. Biegung auf als die zweiten Kontaktflächenanteile 32.

Durch die Bezugszeichen R1 und R2 sind Bewegungsrichtungen des Federunterteils 52 und somit der damit verbundenen Deformationseinrichtung 22 gekennzeichnet. Bei feststehendem Stellglied 23 bzw. bei unbewegtem Stellglied 23 führt bei einem an beiden Kontaktelementen 26, 28 anliegendem Federelement 15, 19 jede Auslenkung bzw. Bewegung des Federunterteils 52 in R1 oder R2 Richtung zu einer Auslenkung des Federelements 15, 19 geneigt zu dessen Längsachse L, insbesondere senkrecht dazu.

Es ist vorstellbar, dass das Federelement 15, 19 schmaler ist als der Abstand zwischen den Kontaktelementen 26, 28 und eine Bewegung des Federunterteils 52 nicht direkt in einer Auslenkung des Federelements 15, 19 resultiert.

Bei unbewegtem Stellglied 23 erfolgt somit in Abhängigkeit von der Stärke der Anregung eine Verschiebung des Deformationsbereichs 22, wodurch bevorzugt zumindest zeitweise die ersten und zweiten Kontaktflächenanteile 30, 32 mit dem Federelement 15, 19 in Kontakt gebracht werden, insbesondere das Federelement 15, 19 an den Kontaktflächenanteilen 30, 32 eines Kontaktelements 26, 28 anlegt wird.

Bei einem nicht feststehenden Stellglied 23 ist in Abhängigkeit der Anregung bzw. einer mit dem Pfeil a dargestellten Beschleunigung des Federunterteils 52 eine Längenänderung des Stellglieds 23 bzw. eine Veränderung der Position der Anbringungsstelle 17 gegenüber der Position des Anbringungsbereichs 18 durchführbar. Im Falle einer geringen Anregung erfolgt bevorzugt eine gleichsinnige Ansteuerung der Verstellung des Stellglieds 23, insbesondere in Form einer Linearverstellung s, mit der Beschleunigung a. Dies bewirkt eine Reduzierung bzw. Eliminierung der Federvorspannung, da sich das Federelement 15, 19 bevorzugt im Wesentlichen ungekrümmt und besonders bevorzugt vollständig ungekrümmt zwischen dem Anbringungsbereich 16 und der Anbringungsstelle 17 erstreckt und somit einer Krümmung durch die Deformationseinrichtung 22 ausweicht.

Bei einer starken Anregung erfolgt bevorzugt eine gegensinnige Ansteuerung des Stellglieds 23, insbesondere der Linearverstellung s, zur Beschleunigung a, d.h., wenn eine starke Beschleunigung in Pfeilrichtung a auf das Federunterteil 52 wirkt erfolgt bevorzugt eine Verstellung des Stellglieds 23 entgegen der Pfeilrichtung s. Der Abstand der Anbringungsstelle 17 und des Anbringungsbereichs 18 wird somit bevorzugt reduziert. Das gegensinnige Ansteuern des Stellglieds 23 bewirkt somit eine Verstärkung der Federkennlinie, wodurch einem möglichen Anschlagen vorgebeugt wird. Nach Abklingen der Beschleunigung a wird die Linearverstellung s bevorzugt in die Ausgangslage zurückgeführt.

Im Falle langfristiger Abweichungen, insbesondere bei Berg- und Talfahrten, erfolgt bevorzugt eine konstante Linearverstellung um der Hangabtriebskraft entgegen zu wirken.

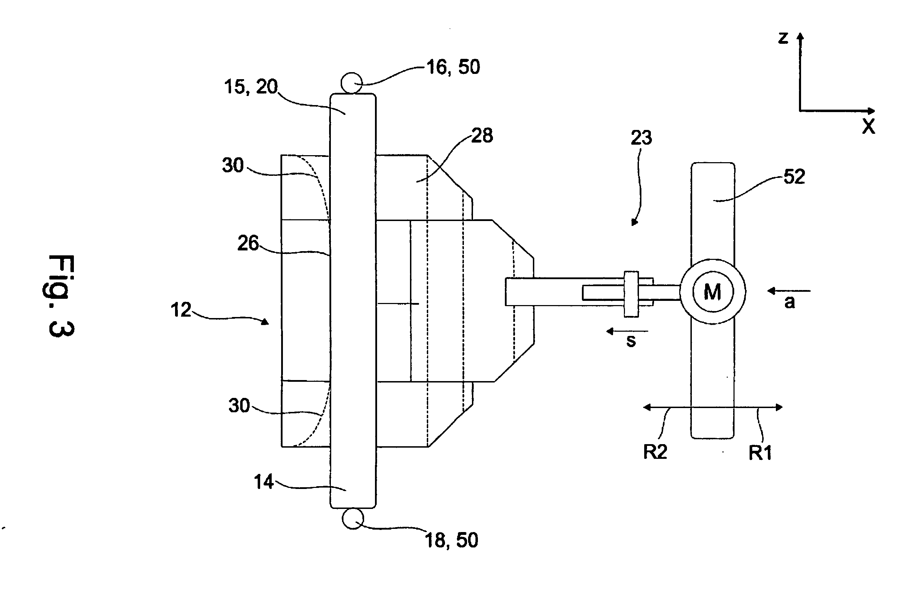

In Fig. 3 ist eine zweidimensionale Darstellung einer weiteren Ausführungsform der vorliegenden Erfindung dargestellt. Der Fig. 3 lässt sich ebenfalls, wie in Fig. 2, eine Deformationseinrichtung 22 mit Kontaktelementen 26, 28 und Kontaktflächenbereichen 30, 32 entnehmen. Das Federelement 15, 20, insbesondere ein pneumatisches Federelement 20 und bevorzugt ein schlauchförmiges bzw. schlauchartiges Federelement 20 aus einem flexiblen Material, wie beispielsweise Kunststoff oder Gummi, erstreckt sich zwischen zwei Anbringungsbereichen 16,18, die bevorzugt beide mit einem Federungsoberteil 50 verbunden sind bzw. direkt daran angeordnet sind und ist bevorzugt ebenfalls geneigt zu seiner Längsrichtung L von Kontaktelementen 26, 28 umgeben, die bevorzugt in derselben Ebene angeordnet sind. Das Stellglied 23 ist in dieser Ausführungsform bevorzugt zwischen dem Federungsunterteil 52 und der Deformationseinrichtung 22 angeordnet bzw. verbindet die Deformationseinrichtung 22 mit dem Federungsunterteil 52. Das Bezugszeichen 14 kennzeichnet das Aufnahmevolumen des pneumatischen Federelements 15, 20, das bevorzugt gekapselt ist, d.h., dass bevorzugt kein Gastransport in das pneumatische Federelement 15, 20 hinein oder aus dem pneumatischen Federelement 15, 20 heraus möglich ist. Es ist jedoch denkbar, dass das pneumatische Federelement 15, 20 mit einer Ventileinrichtung (nicht gezeigt) versehen ist und dem Aufnahmeraum 14 über diese Ventileinrichtung Gas, dauerhaft oder nur zeitweise, zu- oder abführbar ist.

Bei einer geringen Anregung erfolgt bevorzugt eine gegensinnige Ansteuerung des Stellglieds 23, insbesondere der Linearverstellung s, zur Beschleunigung a, d.h., dass eine Linearverstellung entgegengesetzt der Pfeilrichtung s bei einer Beschleunigung in Pfeilrichtung a erfolgt. Dies bewirkt eine Reduzierung bzw. Eliminierung der Federvorspannkraft, da der Beschleunigung a bevorzugt ausschließlich durch eine Gegenbewegung bzw. Kompensationsbewegung des Stellglieds 23 entgegengewirkt wird bzw. entgegenwirkbar ist.

Bei einer starken Anregung erfolgt bevorzugt eine gleichsinnige Ansteuerung des Stellglieds 23, insbesondere der Linearverstellung s, mit der Beschleunigung a. Dies bewirkt eine verstärkte Federkennlinie, da eine bestimmte Auslenkung des Federelements 15, 20, insbesondere eine bestimmte Komprimierung des Gases in dem pneumatischen Federelement 20, das bevorzugt Luft ist, früher erreicht wird, wodurch einem Anschlagen vorgebeugt wird bzw. vorbeugbar ist. Nach Abklingen der Beschleunigung a wird das Stellglied 23, insbesondere die Linearverstellung s, in die Ausgangslage zurückgeführt.

Im Falle langfristiger Abweichungen, insbesondere bei Berg- und Talfahrten, erfolgt ebenfalls bevorzugt eine konstante Linearverstellung um der Hangabtriebskraft entgegen zu wirken.

Die vorliegende Erfindung beschreibt somit bevorzugt die Änderung der Vorspannung eines Federelements 15, 19, 20 durch die Verstellung eines oder beider Federanlenkpunkte am Federoberteil bzw. am Federunterteil.

Es ist weiterhin denkbar, dass die erste und zweite Ausführungsform miteinander zu einer dritten Ausführungsform kombiniert werden, d.h. zwei Stellglieder 23 zum Verstellen der Deformationseinrichtung 22 und mindestens eines Federanlenkpunktes bzw. Anbringungsbereichs 16, 18 und/oder die vertauschte Verwendung von Spiral- bzw. Schraubenfeder 19 und pneumatischem Federelement 20 bzw. pneumatischem Muskel 20 vorgesehen ist.

An dieser Stelle sei noch darauf hingewiesen, dass sich die Anmelderin vorbehält sämtliche in den Anmeldungsunterlagen offenbarten Merkmale zu beanspruchen soweit sie einzeln oder in Kombination miteinander gattungsgemäße oder aus dem Stand der Technik bekannte Blasventile vorteilhaft weiterentwickeln.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Sitz/ Fahrzeugsitz
- 2: Fahrzeug
- 3: Lenkrad
- 4: Sitzfläche
- 6: Rückenlehne
- 7: Armlehne
- 8: Halteeinrichtung
- 10: Kopplungsbereich
- 11: Griff
- 12: Federeinrichtung
- 14: Aufnahmevolumen
- 16: erster Anbringungsbereich
- 17: Gelenk/Anbringungsstelle
- 18: zweiter Anbringungsbereich
- 19: Spiralfeder
- 20: Fluidfederelement
- 22: Deformationseinrichtung
- 23: Stellglied
- 24: Aufnahmebereich
- 26: erstes Kontaktelement
- 28: zweites Kontaktelement
- 30: erste Kontaktflächenanteile
- 32: zweite Kontaktflächenanteile
- 50: Federungsoberteil
- 52: Federungsunterteil

- A: Anbringungsbereich
- L: Längsrichtung
- R1: erste Richtung
- R2: zweite Richtung
- X: Fahrzeug- bzw. Sitzlängsrichtung
- Y: Fahrzeug- bzw. Sitzbreitenrichtung
- Z: Fahrzeug- bzw. Sitzhöhenrichtung/ vertikale Richtung
- a: Beschleunigung
- s: Linearverstellung

## Patentansprüche

1. Sitz (1) für ein Fahrzeug (2), insbesondere für geländegängige Fahrzeuge (2), mit mindestens einer sich in Fahrzeuglängsrichtung (X) und Fahrzeugbreitenrichtung (Y) erstreckenden Sitzfläche (4) zum Aufnehmen einer Person, einer Rückenlehne (6) zum Abstützen des Rückens der Person sowie einer in vertikaler Richtung (Z) unter der Sitzfläche (4) und mit dieser verbundenen Halteeinrichtung (8) zum Beabstanden der Sitzfläche (4) von einem Kopplungsbereich (10) zum Koppeln des Sitzes (1) mit dem Fahrzeug (2), wobei die Halteeinrichtung (8) mindestens eine Federeinrichtung (12) zum zumindest zweitweise beweglichen Anordnen von zumindest der Sitzfläche (4) gegenüber dem Kopplungsbereich (10) in Fahrzeuglängsrichtung (X) und/oder in Fahrzeugbreitenrichtung (Y) aufweist,
wobei die Federeinrichtung (12) mindestens ein sich länglich zwischen zwei Anbringungsbereichen (16, 18) erstreckendes Federelement (15, 19, 20) aufweist, das mit einer Deformationseinrichtung (22) zumindest zeitweise biegbar ist,
**dadurch gekennzeichnet, dass**
die Federkennlinie des Federelements mit mindestens einem geneigt zum Federelement (15, 19, 20) angeordneten Stellglied (23) veränderbar ist, wobei bei einer ersten Anregung des Fahrzeugsitzes (1) eine an die Anregung angepasste gleichsinnige Ansteuerung des Stellglieds (23) zur Veränderung der Position des Anbringungsbereichs (18) der Spiralfeder (19) zum Eliminieren der Federvorspannung durchführbar ist und bei einer zweiten Anregung des Fahrzeugsitzes (1) eine an die Anregung angepasste gegensinnige Ansteuerung des Stellglieds (23) zur Veränderung der Position des Anbringungsbereichs (18) der Spiralfeder (19) zum Verstärken der Federkennlinie durchführbar ist, wobei die zweite Anregung stärker ist als die erste Anregung.

2. Sitz (1) für ein Fahrzeug (2), insbesondere für geländegängige Fahrzeuge (2), mit mindestens einer sich in Fahrzeuglängsrichtung (X) und Fahrzeugbreitenrichtung (Y) erstreckenden Sitzfläche (4) zum Aufnehmen einer Person, einer Rückenlehne (6) zum Abstützen des Rückens der Person sowie einer in vertikaler Richtung (Z) unter der Sitzfläche (4) und mit dieser verbundenen Halteeinrichtung (8) zum Beabstanden der Sitzfläche (4) von einem Kopplungsbereich (10) zum Koppeln des Sitzes (1) mit dem Fahrzeug (2), wobei die Halteeinrichtung (8) mindestens eine Federeinrichtung (12) zum zumindest zweitweise beweglichen Anordnen von zumindest der Sitzfläche (4) gegenüber dem Kopplungsbereich (10) in Fahrzeuglängsrichtung (X) und/oder in Fahrzeugbreitenrichtung (Y) aufweist,
wobei die Federeinrichtung (12) mindestens ein sich länglich zwischen zwei Anbringungsbereichen (16, 18) erstreckendes Federelement (15, 19, 20) aufweist, das mit einer Deformationseinrichtung (22) zumindest zeitweise biegbar ist,
**dadurch gekennzeichnet, dass**
die Federkennlinie des Federelements mit mindestens einem geneigt zum Federelement (15, 19, 20) angeordneten Stellglied (23) veränderbar ist und bei einer ersten Anregung des Fahrzeugsitzes (1) eine an die Anregung angepasste gegensinnige Ansteuerung des Stellglieds (23) zur Veränderung der Position eines gebogenen Kontaktflächenabschnitts (30) der Deformationseinrichtung (22) zum Eliminieren der Federvorspannung des als pneumatisches Federelement (20) ausgebildeten Federelements durchführbar ist und bei einer zweiten Anregung des Fahrzeugsitzes (1) eine an die Anregung angepasste gleichsinnige Ansteuerung des Stellglieds (23) zur Veränderung der Position des gebogenen Kontaktflächenabschnitts (30) der Deformationseinrichtung (23) zum Verstärken der Federkennlinie des als pneumatisches Federelement (20) ausgebildeten Federelements durchführbar ist, wobei die zweite Anregung stärker als die erste Anregung ist.

3. Fahrzeugsitz (1) nach Anspruch 1 oder 2"
**dadurch gekennzeichnet,dass**
die Deformationseinrichtung (22) einen Aufnahmebereich ausbildet, durch den sich das Federelement (15, 19, 20) hindurch erstreckt.

4. Fahrzeugsitz (1) nach Anspruch 3,
**dadurch gekennzeichnet, dass**
zwei Kontaktelemente (26, 28) den Aufnahmebereich ausbilden und Kontaktflächenanteile (30, 32) aufweisen, die nur zeitweise mit dem Federelement (15) in Kontakt stehen.5.

5. Fahrzeugsitz (1) nach Anspruch 4,
**dadurch gekennzeichnet, dass**
die Kontaktflächenanteile (30, 32) zumindest abschnittsweise gebogen sind.

6. Fahrzeugsitz (1) nach einem der vorangegangenen Ansprüche,
**dadurch gekennzeichnet, dass**
das Stellglied (23) elektrisch, mechanisch, pneumatisch, hydraulisch oder durch Kombinationen daraus betreibbar ist.

7. Fahrzeugsitz (1) nach einem der vorangegangenen Ansprüche,
**dadurch gekennzeichnet, dass**
mindestens eine Sensoreinheit zur Erfassung von Sitzbewegungen und/oder Fahrzeugbewegungen, insbesondere in Fahrzeuglängsrichtung (X) und/oder Fahrzeugbreitenrichtung (Y), vorgesehen ist, die Daten an eine Steuereinrichtung zum Verändern der Stellung des Stellglieds (23) übermittelt.

8. Fahrzeugsitz (1) nach einem der vorangegangenen nach Ansprüche 1 rückberzogegen Ansprüche,
**dadurch gekennzeichnet, dass**
mindestens ein Stellglied (23) mit einem Anbringungsbereich (18) zum linearen Bewegen des Anbringungsbereichs (18) gekoppelt ist.

9. Fahrzeugsitz (1) nach einem der vorangegangenen Ansprüche,
**dadurch gekennzeichnet, dass**
das Federelement (15) eine Spiralfeder (19) oder ein pneumatisches Federelement (20) ist, das bei einer Biegung durch die Deformationseinrichtung (22) eine Auslenkung in Fahrzeugsitzbreitenrichtung 8x) erfährt und an mindestens einem gebogenen Kontaktflächenabschnitt (30) der Deformationseinrichtung (22) anliegt.

10. Fahrzeugsitz (1) nach einem der vorangegangenen nach Anspruch 2 rückbezogenen Ansprüche, **dadurch gekennzeichnet, dass** mindestens ein Stellglied (23) mit einem Kontaktelement (26, 28) zum linearen Bewegen des Kontaktelementes (26,28) gekoppelt ist.

## Claims

1. A seat (1) for a vehicle (2), in particular for all-terrain vehicles (2), with at least one seat area (4) extending in the longitudinal direction (X) of the vehicle and in the width-wise direction (Y) of the vehicle for receiving a person, a backrest (6) for supporting the back of the person and a holding device (8) connected in the vertical direction (Z) under the seat area (4) and to the latter for keeping the seat area (4) at a distance from a coupling region (10) for coupling the seat (1) to the vehicle (2), wherein the holding device (8) has at least one spring device (12) for the movable arrangement at least for a time of at least the seat area (4) with respect to the coupling region (10) in the longitudinal direction (X) of the vehicle and/or in the width-wise direction (Y) of the vehicle, wherein the spring device (12) has at least one spring element (15, 19, 20) which extends in an elongate manner between two application regions (16, 18) which is capable of being bent by a deformation device (22) at least for a time,
**characterized in that**
the spring characteristic line of the spring element is capable of being changed by at least one setting member (23) arranged at an inclination to the spring element (15, 19, 20), wherein with a first stimulus of the vehicle seat (1) an actuation of the setting member (23) in the same direction and in a manner adapted to the stimulus is capable of being carried out in order to change the position of the application region (18) of the spiral spring (19) in order to eliminate the pre-stressing of the spring, and with a second stimulus of the vehicle seat (1) an actuation of the setting member (23) in the opposite direction and in a manner adapted to the stimulus is capable of being carried out in order to change the position of the application region (18) of the spiral spring (19) in order to strengthen the spring characteristic line, wherein the second stimulus is stronger than the first stimulus..

2. A seat (1) for a vehicle (2), in particular for all-terrain vehicles (2), with at least one seat area (4) extending in the longitudinal direction (X) of the vehicle and in the width-wise direction (Y) of the vehicle for receiving a person, a backrest (6) for supporting the back of the person and a holding device (8) connected in the vertical direction (Z) under the seat area (4) and to the latter for keeping the seat area (4) at a distance from a coupling region (10) for coupling the seat (1) to the vehicle (2), wherein the holding device (8) has at least one spring device (12) for the movable arrangement at least for a time of at least the seat area (4) with respect to the coupling region (10) in the longitudinal direction (X) of the vehicle and/or in the width-wise direction (Y) of the vehicle, wherein the spring device (12) has at least one spring element (15, 19, 20) which extends in an elongate manner between two application regions (16, 18) which is capable of being bent by a deformation device (22) at least for a time,
**characterized in that**
the spring characteristic line of the spring element is capable of being changed by at least one setting member (23) arranged at an inclination to the spring element (15, 19, 20) and that with a first stimulus of the vehicle seat (1) an actuation of the setting member (23) in the opposite direction and in a manner adapted to the stimulus is capable of being carried out in order to change the position of a bent contact face portion (30) of the deformation device (22), in order to eliminate the pre-stressing of the spring element (20) formed as a pneumatic spring element, and with a second stimulus of the vehicle seat (1) an actuation of the setting member (23) in the same direction and in a manner adapted to the stimulus is capable of being carried out in order to change the position of the bent contact face portion (30) of the deformation device (23), in order to strengthen the spring characteristic line of the spring element (20) formed as a pneumatic spring element, wherein the second stimulus is stronger than the first stimulus.

3. A vehicle seat (1) according to claim 1 or 2,
**characterized in that**
the deformation device (22) forms a receiving region through which the spring element (15, 19, 20) extends.

4. A vehicle seat (1) according to claim 3
**characterized in that**
two contact elements (26, 28) form the receiving region and have contact face portions (30, 32) which are in contact with the spring element (15) only for a time.

5. A vehicle seat (1) according to claim 4,
**characterized in that**
the contact face portions (30, 32) are bent at least locally.

6. A vehicle seat (1) according to any one of the preceding claims,
**characterized in that**
the setting member (23) is capable of being operated in an electrical, mechanical, pneumatic or hydraulic manner or by combinations thereof.

7. A vehicle seat (1) according to any one of the preceding claims,
**characterized in that**
at least one sensor unit is provided in order to detect seat movements and/or vehicle movements, in particular in the longitudinal direction (X) of the vehicle and/or in the width-wise direction (Y) of the vehicle, which transmits data to a control device for changing the setting of the setting member (23).

8. A vehicle seat (1) according to any one of the preceding claims referring to claim 1,
**characterized in that**
at least one setting member (23) is coupled to an application region (18) for the linear movement of the application region (18).

9. A vehicle seat (1) according to any one of the preceding claims,
**characterized in that**
the spring element (15) is a spiral spring (19) or a pneumatic spring element (20), which when bent by the deformation device (22) undergoes a deviation in the width-wise direction 8x) of the vehicle seat and rests on at least one bent contact face portion (30) of the deformation device (22).

10. A vehicle seat (1) according to any one of the preceding claims referring to claim 2,
**characterized in that**
at least one setting member (23) is coupled to a contact element (26, 28) for the linear movement of the contact element (26, 28).

## Revendications

1. Siège (1) pour un véhicule (2), en particulier pour des véhicules tout-terrain (2), avec au moins une surface de siège (4) s'étendant dans la direction longitudinale du véhicule (X) et dans la direction de la largeur du véhicule (Y), et qui est destinée à recevoir une personne, un dossier (6) pour supporter le dos de la personne, ainsi qu'un dispositif de retenue (8) dans la direction verticale (Z) sous la surface de siège (4) et raccordée à cette dernière, pour espacer la surface de siège (4) vis-à-vis d'une zone d'accouplement (10) pour l'accouplement du siège (1) avec le véhicule (2), dans lequel le dispositif de retenue (8) présente au moins un dispositif de ressort (12) pour l'agencement mobile au moins de façon intermittente d'au moins la surface de siège (4) par rapport à la zone d'accouplement (10) dans la direction longitudinale du véhicule (X) et/ou dans la direction de la largeur du véhicule (Y).
dans lequel le dispositif de ressort (12) présente au moins un élément de ressort (15, 19, 20) s'étendant en long entre deux zones de mise en place (16, 18), lequel élément de ressort peut être courbé au moins de façon intermittente avec un dispositif de déformation (22),
**caractérisé en ce que**
la courbe caractéristique de ressort de l'élément de ressort peut être modifiée avec au moins un actionneur (23) agencé en position inclinée par rapport à l'élément de ressort (15, 19, 20), dans lequel lors d'une première sollicitation du siège du véhicule (1), un pilotage de même sens de l'actionneur (23) et adapté à la sollicitation peut être exécuté afin de modifier la position de la zone de mise en place (18) du ressort à boudin (19) afin d'éliminer la précontrainte de ressort, et lors d'une seconde sollicitation du siège du véhicule (1), un pilotage en sens inverse de l'actionneur (23) et adapté à la sollicitation peut être exécuté afin de modifier la position de la zone de mise en place (18) du ressort à boudin (19) afin de renforcer la courbe caractéristique de ressort, la seconde sollicitation étant plus forte que la première sollicitation.

2. Siège (1) pour un véhicule (2), en particulier pour des véhicules tout-terrain (2), avec au moins une surface de siège (4) s'étendant dans la direction longitudinale du véhicule (X) et dans la direction de la largeur du véhicule (Y), et qui est destinée à recevoir une personne, un dossier (6) pour supporter le dos de la personne, ainsi qu'un dispositif de retenue (8) dans la direction verticale (Z) sous la surface de siège (4) et raccordée à cette dernière, pour espacer la surface de siège (4) vis-à-vis d'une zone d'accouplement (10) pour l'accouplement du siège (1) avec le véhicule (2), dans lequel le dispositif de retenue (8) présente au moins un dispositif de ressort (12) pour l'agencement mobile au moins de façon intermittente d'au moins la surface de siège (4) par rapport à la zone d'accouplement (10) dans la direction longitudinale du véhicule (X) et/ou dans la direction de la largeur du véhicule (Y),
dans lequel le dispositif de ressort (12) présente au moins un élément de ressort (15, 19, 20) s'étendant en long entre deux zones de mise en place (16, 18), lequel élément de ressort peut être fléchi au moins temporairement avec un dispositif de déformation (22),
**caractérisé en ce que**
la courbe caractéristique de ressort de l'élément de ressort peut être modifiée avec au moins un actionneur (23) agencé en position inclinée par rapport à l'élément de ressort (15, 19, 20), et lors d'une première sollicitation du siège du véhicule (1), un pilotage en sens inverse de l'actionneur (23) et adapté à la sollicitation peut être exécuté afin de modifier la position d'une section de surface de contact courbée (30) du dispositif de déformation (22) afin d'éliminer la précontrainte de ressort de l'élément de ressort conçu en tant qu'élément de ressort pneumatique (20), et lors d'une seconde sollicitation du siège du véhicule (1), un pilotage de même sens de l'actionneur (23) et adapté à la sollicitation peut être exécuté afin de modifier la position de la section de surface de contact courbée (30) du dispositif de déformation (22) afin de renforcer la courbe caractéristique de ressort de l'élément de ressort conçu en tant qu'élément de ressort pneumatique (20), la seconde sollicitation étant plus forte que la première sollicitation.

3. Siège de véhicule (1) selon la revendication 1 ou 2,
**caractérisé en ce que**
le dispositif de déformation (22) constitue une zone de réception à travers laquelle s'étend l'élément de ressort (15, 19, 20).

4. Siège de véhicule (1) selon la revendication 3,
**caractérisé en ce que**
deux éléments de contact (26, 28) constituent la zone de réception et présentent des fractions de surface de contact (30, 32) qui ne sont en contact avec l'élément de ressort (15) que de façon intermittente.

5. Siège de véhicule (1) selon la revendication 4,
**caractérisé en ce que**
les parties de surface de contact (30, 32) sont courbées au moins dans certaines sections.

6. Siège de véhicule (1) selon une des revendications précédentes,
**caractérisé en ce que**
l'actionneur (23) peut être opéré de façon électrique, mécanique, pneumatique, hydraulique ou par des combinaisons de ces moyens.

7. Siège de véhicule (1) selon une des revendications précédentes,
**caractérisé en ce qu'**
il est prévu au moins une unité de capteur pour la détection de mouvements du siège et/ou de mouvements du véhicule, en particulier dans la direction longitudinale du véhicule (X) et/ou dans la direction de la largeur du véhicule (Y), cette unité transmettant des données à un dispositif de commande pour modifier le positionnement de l'actionneur (23).

8. Siège de véhicule (1) selon une des revendications précédentes rapportées à la revendication 1,
**caractérisé en ce qu'**
au moins un actionneur (23) est couplé avec une zone de mise en place (18) aux fins d'un mouvement linéaire de la zone de mise en place (18).

9. Siège de véhicule (1) selon une des revendications précédentes,
**caractérisé en ce que**
l'élément de ressort (15) est un ressort à boudin (19) ou un élément de ressort pneumatique (20) qui, lors d'une flexion par le dispositif de déformation (22), subit une déviation dans la direction de la largeur du véhicule (Y) et qui prend appui sur au moins une section de surface de contact courbée (30) du dispositif de déformation (22).

10. Siège de véhicule (1) selon une des revendications précédentes rapportées à la revendication 2,
**caractérisé en ce qu'**
au moins un actionneur (23) est couplé avec un élément de contact (26, 28) pour un mouvement linéaire de l'élément de contact (26, 28).
